(19) Europäisches Patentamt
European Patent Office
Office européen des brevets

(11) EP 1 802 795 B1

(12) **EUROPEAN PATENT SPECIFICATION**

(45) Date of publication and mention of the grant of the patent:
**10.12.2008 Bulletin 2008/50**

(21) Application number: **05782930.1**

(22) Date of filing: **15.09.2005**

(51) Int Cl.:
***D02G 3/44*** *(2006.01)*

(86) International application number:
**PCT/IB2005/053029**

(87) International publication number:
**WO 2006/030395 (23.03.2006 Gazette 2006/12)**

(54) **ELONGATED ELECTRO-OPTIC DEVICE**

GESTRECKTE ELEKTROOPTISCHE VORRICHTUNG

DISPOSITIF ELECTRO-OPTIQUE ALLONGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.09.2004 GB 0420809**

(43) Date of publication of application:
**04.07.2007 Bulletin 2007/27**

(73) Proprietor: **Koninklijke Philips Electronics N.V.**
**5621 BA Eindhoven (NL)**

(72) Inventor: **Verschueren, Alwin**
**Redhill Surrey RH1 5HA (GB)**

(74) Representative: **Groenendaal, Antonius W. M. et al**
**Philips**
**Intellectual Property & Standards**
**P.O. Box 220**
**5600 AE Eindhoven (NL)**

(56) References cited:
**GB-A- 2 002 562**
**GB-A- 2 096 814**
**US-A- 3 819 973**
**US-A- 5 876 863**
**US-A1- 2002 130 624**
**US-A1- 2003 099 858**
**US-A1- 2004 145 313**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 802 795 B1

## Description

This invention relates to an electro-optical device having one dimension that is substantially greater than the other dimensions. In particular, the invention relates to an elongated electro-optical device having a length that is substantially greater than the other dimensions, and is addressable along this length.

An example of this is a fibre or filament, especially one that is suitable for inclusion in a fabric or garment having one or more indicator displays incorporated therein.

Another example is a so-called ropelight, comprising a hose consisting of a plurality of separate lights, that can be controllably addressed, and used as an indicator display or as decorative lighting.

Various types of fibres or filaments formed from electro-optical materials which are capable of undergoing colour change are known. For example, it is known to form a fibre or filament from an electro-cptically active material, such as an electro-luminescent material or a poly LED material. It is also possible to use liquid crystals, electrophoretic particle suspensions or electrochrome materials as the electro-optic material forming the elongated electro-optic device.

In general, all known fibres and filaments of this type have the same basic structure and comprise:

1. A conducting core or electrode generally running axially through the fibre or filament at or towards the centre of the fibre or filament;
2. An electro-optic layer coating the core electrode; and
3. A transparent conducting outer electrode.

By applying a voltage difference between the core electrode and the outer electrode, an electric field is generated in the electro-optic layer. The electric field produced is homogeneous, over the entire length of the fibre or filament, and induces a change in the optical state of the electro-optical layer. The change in the optical state is dependent on the material forming the electro-optical layer, and the field applied across the electrodes.

US 5,753,381 discloses an electrically activated light emitting cylindrical composite filament. A core conductor is optionally surrounded by a first insulation layer, surrounded by two or more individually addressable electrodes and an electroluminescent phosphor. Light is produced by the phosphor when the core conductor and the electrodes are connected to and energized by an appropriate electrical power supply. By controlling the sequence of excitation of each electrode individually, any number of time dependent light patterns and effects can be produced.

In addition various types of ropelights are known, consisting of discrete light bulbs or LEDs. A ropelight typically comprises two electrode wires running along the length of the hose, and consisting of a plurality of discrete light sources (such as incandescent bulbs or LEDs) all being fed by a potential difference between the two electrode wires. Further the optical appearance of the ropelight is uniform, or at least repeated periodically, over the entire length of the hose.

It is an object of the present invention to provide an electro-optic device in which the length and position of the optically active part of the device can be controlled by effecting a phase delay along either of a first or a second electrode forming part of the device.

According to a first aspect of the present invention there is provided an electro-optic device having a first end and an opposite second end comprising an electro-optically active part;
a first electrode having a first end and an opposite second end;
a second electrode being a coiled member having a first end and an opposite second end;
the electro-optically active part being positioned at least partially between the first and second electrodes; a third electrode being capacitively connected to the second electrode; the electro-optic device further comprising control means for controlling the optical state of a predetermined region of the electro-optically active part, such that the position of the predetermined region within the electro-optic device is controllable.

Preferably, the length of the predetermined region is also controllable.

By means of the present invention it is possible to control the optical state of a predetermined region of the electro-optic device in such a way that either the position of the predetermined region or the length of the region or both the position and the length of the region may be controlled.

This is in sharp contrast to known colour change electro-optic devices in which it is possible only to change the optical state of the electro-optically active layer homogeneously over the entire length of the electrodes. In practice, this means that the optical state of a known colour change electro-optic device is the same along the entire length of the device.

In other words, in a known colour change fibre, when the electro-optically active part is formed from a material having a threshold voltage above which it is in an on state, and below which it is in an off state, the entire fibre will either be in the off state emitting no light or in the on state emitting light.

By means of the present invention, it is possible to vary the optical state of the electro-optically active part along the length of the electro-optic device so that a variable portion and variable length of the elongated electro-optic device may be in the on state and therefore emitting light at any given time.

The optical state of the device can be such that the device emits internal light, or reflects or absorbs light from external sources. In use, the optical state of the predetermined region may be such that it emits light when no other part of the device emits light.

The predetermined region of the electro-optic device may comprise a portion only of the device, or may comprise the entire device.

The present invention is particularly suited for use as an indicator, or as an indicator incorporated into a garment, or as a decorative light.

Advantageously, the electro-optic device comprises an axis; the first ends of the device, first electrode and second electrode respectively lie in a first plane substantially perpendicular to the axis, and the second ends of the device, first electrode and second electrode respectively lie in a second plane spaced apart from the first plane, and substantially perpendicular to the axis.

Advantageously, the control means comprises voltage means for applying an alternating voltage, or alternating voltages, across the electro-optically active part.

The optical state of an electro-optically active material or element may be altered by varying an electric field applied across the material or element. The material or element preferably has a threshold voltage. When electric fields of below the threshold voltage are applied to the material or element, the material or element remains in an off state, and does not emit light. When electric fields above the threshold level are applied across the material or element, the material or element switches into an on state in which it emits light.

By means of the present invention, the threshold voltage of a material or element forming the electro-optically active layer will be exceeded in a predetermined region or predetermined regions along the length of the device.

The length of a predetermined region may be varied by varying the amplitudes of the alternating voltages applied across the electro-optically active part. By increasing the difference between the amplitudes, the length of the predetermined regions will increase, and vice versa.

Preferably, the voltage means comprises a first voltage source for applying a first alternating voltage to the first end of first electrode, and a second voltage source for applying a second alternating voltage to the first end of second electrode.

Preferably, the first electrode is adapted to transfer the first voltage with a substantially constant phase from the first to the second end of the first electrode, and the second electrode is adapted to transfer the second voltage with a phase delay from the first end to the second end of the second electrode.

Advantageously, the control means further comprises: a plurality of inductive elements incorporated inside the second electrode; and a plurality of capacitive elements positioned between the second third electrodes.

The first alternating voltage may be applied by the first voltage source to the first end of the first electrode. This first electrode is adapted such that its voltage is substantially uniform over the length of the electro-optic device.

The second alternating voltage may be applied to the first end of the second electrode. The second electrode is adapted such that its voltage is transferred from its first end to its second end with a phase delay.

The phase delay increases along the length of the second electrode from the first end, and is equal to one half period, substantially half way along the second electrode, and is equal to one full period at the second end of the second electrode.

The voltage acting on the electro-optically active part of the device is equal to the voltage difference between the first and second electrodes, at a given position and a predetermined time instance. The voltage difference thus represents the difference between the first and second voltages.

In a first embodiment of the invention, the phases of the first and second voltages are chosen to be equal at the first end of each electrode. In this embodiment, the amplitudes of the first and second voltages are also chosen to be equal. This means that at the first end of each electrode, the voltage acting on the electro-optical part of the device will be substantially zero, since the voltage difference between the first and second voltages is substantially zero. In other words, there is destructive interference between the first and second voltages.

Halfway along the length of the device, the phase in the second electrode is set to lag by half a period compared to the phase in the first end of the second electrode (and therefore also compared to the phase in the first electrode). This means that, at this point the first voltage will be opposite to the second voltage. This in turn means that the difference between the first and second voltages will be at a maximum. In other words at this point, the first and second voltages constructively interfere with one another.

At the second end of the device, the phase of the second voltage will exactly lag the phase of the first voltage by one period. This means that at the second end of the device, the phase difference between the first and second voltages will again be zero, and therefore the voltage difference will also be zero. In regions of the device in which the voltage applied across the electro-optically active part of the device is over the threshold voltage of the electro-optically active material forming the part, light will be emitted.

Preferably, the control means controllably varies the phase of the first voltage at the first end of the first electrode relative to the phase of the second voltage at the first end of the second electrode.

This will result in the region of the electro-optically active part in which the voltage is above the threshold level being shifted by a predetermined distance along the length of the device depending on the difference in phase of the first and second voltages at the first ends of the first and second electrodes respectively. For example, if a phase difference of half a period is selected, then the maximum voltage difference over the electro-optically active part will occur at both the first and second ends of the device, while at a point halfway along the device, the voltage difference will be zero.
Advantageously, the control means is adapted to controllably vary the amplitude of the first voltage relative to the second voltage.
Conveniently, the control means is adapted to controllably vary the frequency of the first voltage relate to the second voltage.
Advantageously, the electro-optically active layer comprises an electro-optically active material, and the electro-optic device comprises a fibre or filament.
Preferably the fibre or filament is substantially cylindrical.
Preferably, the electro-optically active layer comprises an electro-luminescent material, although other types of electro-optically active material could also be used.
Preferably, the second electrode comprises an elongate conductor in the form of a wound coil having a plurality of coils.
Advantageously, the electro-optic device further comprises an insulating coating formed between adjacent coils of the elongate conductor. This prevents adjacent coils from shorting with each other.
Conveniently, the insulating coating is transparent to allow light emitted by electro-optically active layer to be transmitted through the fibre.
Preferably, the third electrode is positioned close to an outer surface of the device. The third electrode comprises an outer conducting coating that is capacitively coupled to the second electrode. The outer conducting coating can be grounded to function as a ground layer which is safe to touch.
Advantageously, the wound coil of the second electrode comprises an insulating outer coating, in order to establish a well-defined capacitive connection to the third electrode. The term "well-defined" means herein that the capacitative connection is reproducible and there is a reliable separation between the second and third electrodes. In addition, the chances of an undesired resistive connection to the third electrode is minimised.
Preferably, the outer conductive coating is transparent, to allow light emitted from the electro-optically active layer to be transmitted through the fibre.
Alternatively, the electro-optically active part comprises a plurality of light emitting diodes (LEDs) and the electro-optic device comprises a ropelight. LEDs are particularly suitable for use with the present invention due to their threshold voltage for light emission.
According to a second aspect of the present invention there is provided a method of manufacturing an electro-optic device comprising an electro-optically active material comprising the steps of:

(a) depositing a layer of an electro-optically active material around a first elongate conducting member;
(b) allowing the layer to harden;
(c) winding a second elongate conducting member around the hardened electro-optically active material;
(d) depositing an insulating material between adjacent coils of the second conducting member;
(e) depositing a conducting coating around the elongated electro-optic device, being capacitively coupled to the second electrode.

A further advantageous feature of the second aspect of the invention are set out in appended Claim 20.
According to a third aspect of the present invention there is provided a method of driving an electro-optic device comprising a first electrode, a second electrode, each electrode having a first end and a second end, and an electro-optically active part positioned at least partially between the first and second electrodes, the second electrode being a coiled elongated member and the electro-optic device further comprising a third electrode being capacitively coupled to the second electrode, the method comprising the steps of:

applying an alternating voltage difference across the electro-optically active layer by applying a first voltage to the first end of the first electrode, and a second voltage to the first end of the second electrode; and
introducing a phase delay into the second electrode, thereby controlling the amplitude of the alternating voltage difference across the electro-optically active layer.

Further preferred and advantageous features of the third aspect of the invention as set out in appended Claims 22 to 24.
The invention will now be further described by way of example only with reference to the accompanying drawings in which:

Figures 1a and 1b are schematic representations of a conventional colour change fibre;
Figures 2a to 2f are schematic representations of an electro-optic device in the form of a fibre according to the present invention;
Figure 3 is a detailed schematic diagram of an electro-optic device in the form of a fibre according to the present invention;
Figure 4 is an electric circuit representing the electro-optic device of Figure 3;
Figure 5 is a graph showing the variation of luminous power within the electro-optic device for various phase differences between the first and second voltages applied to each of the first and second electrodes;
Figure 6 is a graph showing how the length of a luminous section of the device of Figure 4 can be varied by varying the amplitudes of the first and second voltages applied to each of the first and second electrodes;
Figure 7 is a schematic representation of a second embodiment of the present invention; and
Figure 8 is a circuit diagram showing how the phase delay along the second electrode can be derived.

Referring to Figures 1 a and 1 b a conventional colour change fibre is designated generally by the reference numeral 2. Known colour change fibres generally comprise an inner core electrode and an outer electrode in the form of a transparent coating. Between the inner and outer electrodes is an electro-optically active material. In Figure 1a the electro-optically active material is shown in an off state, and in Figure 1b the electro-optically active material is shown in an on state emitting light. In conventional colour change fibres it is possible only to have the entire fibre in an on state or in an off state. In other words it is possible only to have the entire fibre either emitting light or not emitting light.

Referring now to Figures 2a to 2f, an electro-optic device according to the present invention in the form of a fibre is designated generally by the reference numeral 4. According to the present invention, as will be explained in more detail hereinbelow, it is possible to alter the optical state of a predetermined region of the device 4 such that the length and position of the predetermined region 6 may be controlled.

In Figure 2a, the entire device is in an off state therefore no light is emitted.

In each of Figures 2b to 2f the device 4 comprises a predetermined region 6 in which the optical state of the region 6 is such that the region emits light whilst the rest of the device does not emit light. As can be seen in Figures 2b to 2f, the length and position of the predetermined region 6 can be controlled by means of the present invention.

Referring to Figure 3, a fibre 4 according to the present invention is shown in more detail. The fibre 4 comprises a first electrode 8 in the form of an inner conducting core. The electrode 8 comprises a low ohmic conducting core wire, for example copper.

The device 4 further comprises a second electrode 12 in the form of a coiled elongate member that is wound along an outer surface of the electro-optically active layer 10. The second electrode 12 is wound in such a way that there are spaces between adjacent coils 14, through which light emitted from the electro-optically active layer 10 can escape the device.

An insulating material 16 is deposited between adjacent coils 14. The insulating coating is further deposited so that it surrounds the second electrode 12.

The device 4 further comprises a third electrode in the form of transparent conducting coating 18 formed for example from ITO, which is deposited around the device. The transparent conducting coating 18 functions as a ground layer, that is safe to touch. At the same time the layer is capacitively coupled to the second electrode 12.

The device 4 is formed by depositing the electro-optically active layer 10 on the first electrode 8. When the layer 10 has hardened the second electrode 12 is wound around an outer surface of the layer 10. The insulating layer is then deposited between and around adjacent coils 14. Finally the coating 18 is deposited around the device 4.

In one embodiment of the invention, the second electrode 12 already has an insulating layer on an outer surface of the electrode. This means that no additional insulating material needs to be placed over the elongate member once the elongate member has been wound around the electro-optically active layer 10. This results in a more accurately defined insulator thickness. This in turn reduces the chances of shorts occurring between the second electrode 12 and the transparent coating 18.

A first voltage is applied to the first electrode 8, and a second voltage is applied to the second electrode 12. Because the second electrode 12 comprises a coil wound along the length of the fibre, which coil is capacitively coupled to the third electrode 18, a phase delay is introduced to the voltage along the length of the second electrode 12. The first electrode 8, however, has an electric signal with a substantially constant voltage along the length of the fibre.

At certain positions along the length of the fibre and at certain time instances, there is a phase difference between the first and second electrodes 8, 12 that is approximately 180° (half a period). At these positions, the voltage acting on the electro-optically active layer 10 will be a maximum, and is arranged to exceed the threshold for optical activation of the electro-optically active layer.

The self-inductance L and the capacitive coupling C between the second electrode 12 and third electrode 18 are carefully adjusted. In addition, the second electrode 12 is carefully terminated at one end to ground with its specific impedance. The conditions necessary to effect the phase delay along the second electrode 12 are set out in more detail below with particular reference to Figure 8.

Turning now to Figure 4 an electrical circuit representing the fibre 4 illustrated in Figure 3 is illustrated. The circuit comprises three potential lines, a ground line 20, a coil line 22 and a core or uniform phase line 24. The horizontal length of the lines 20, 22, 24 correspond to the length of the device 4.

The coil line 22 represents the second electrode 12, which in this embodiment is in the form of a coil as illustrated in Figure 3. The core or uniform phase line 24 represents the first electrode 8. The ground line 20 represents the third electrode 18. The second electrode 12 may be considered as comprising a plurality of segments and a plurality of self-inductive elements $L_{coil}$ for every segment, resistive elements $R_{coil}$ also for every segment, and a capacitive coupling $C_{coating}$ to the ground line. The concept of segments is used to enable the fibre to be mathematically modelled. The fibre is not necessarily formed physically from segments.

At a first end, represented by the left end of the device 4 as depicted in Figure 3, the second electrode 12 (representing the coil line 22) is connected to the third electrode 18 (representing the ground line 20) with a signal generator $V_{coil}$ with an angular frequency $\omega$. As a result of the interaction between the inductive and capacitive elements, a gradual phase delay in the signal will develop along the length of the coil line equal to between neighbouring segments of the model.

At a second end of the device indicated at the right hand side of Figure 3, the electrode 12 (representing the coil line 22) is connected to the electrode 18 (representing the ground line 20) with a resistance

$$R_{term} = \sqrt{\frac{L_{coil}}{C_{coating}} - \frac{1}{4}\left(\omega L_{coil}\right)^2} \ .$$

The function of this matched resistance is to "absorb" the incoming signals over the second electrode 12, in order to prevent back-reflected signals. In addition the coil resistance $R_{coil}$ should be selected to be lower than the inductance impedance of the coil $\omega L_{coil}$ in order to maintain an equal amplitude of the signal over the length of the second electrode 12.

Between the second electrode 12 and the first electrode 8, represented by coil line 22 and uniform phase line 24 respectively, the electro-optically active layer 10 is situated. The electro-optically active layer 10 has a resistance $R_{optic}$ and capacitance $C_{optic}$ per modelled segment of the second electrode 12.

At the left end of the fibre 4, the first electrode 8 (representing the core line 24) is connected to the third electrode 18 (representing the ground line 20), with a second signal generator Vcore, also having an angular frequency of $\omega$. There is no phase delay along the first electrode 8 due to the low resistance along first electrode which is represented as zero in the circuit shown in Figure 4.

This means that electrical fields will be generated over the electro-optically active layer 10, also with a frequency of $\omega$. However the amplitude of the electrical fields will depend upon the phase difference between the first electrode 8 and second electrode 12. The maximum amplitude will occur at positions with a phase difference of 180°, and the minimum amplitude at a phase difference of 0°.

Because the phase of the voltage in the second electrode 12 varies along the device 4, the amplitude of the electric field applied across the electro-optically active layer 10 also varies along the length of the device. This means that phase tuneable regions are created where the electric field, and the RMS power exceeds the threshold for optical activation of the electro-optically active layer 10. Other regions along the device are also created where no optical activity will be perceivable because the electric field does not exceed threshold for optical activation of the electro-optically active layer 10.

Advantageously, the capacitance coupling to the third electrode ($C_{coating}$) is large enough to ensure that its impedance is small compared to the equivalent impedance of the electro-optically active layer 10 in order to determine phase delay.

Turning now to Figure 5, the variation of luminous power over a elongated electro-optic device according to an embodiment of the present invention, with position along the device is shown graphically.

The results depicted in Figure 5 are based on a device that is modelled with 100 segments of approximately 10cm in length. The total device length used was 10 metres. The radius of the device $r_{fibre}$ (core plus electro-optical layer) was 5mm. The second electrode 12 comprised a thin copper wire having a radius $r_{wire}$ of 0.8mm and an outer insulation coating $r_{coating}$ of 13.8 microns. The thin copper wire was wound to a frequency of 307 windings per metre fibre length (N/l).

The resistance of the electro-optically active layer 10 per model segment was: $R_{optic}$ = 100KΩ.

The capacitance of the electro-optically active layer per model segment was: $C_{optic}$ = 100pF.

In such a fibre, each segment of the fibre has the following parameters per model segment:

- self-inductance of the coil:
- resistance of the coil:
- capacitance to the third electrode:

$$C_{coating} = \frac{\varepsilon 2\pi (r_{fibre} + 2r_{wire})}{r_{coating}} \cdot \frac{1}{100} = 8\ nF$$

And a single termination resistance:

$$R_{term} = \sqrt{\frac{L_{coil}}{C_{coating} + C_{optic}} - \tfrac{1}{4}(\omega L_{coil})^2} = 12.4\Omega$$

This value is valid for a selected angular frequency ω of the voltage applied to each of the first and second electrodes of 6.28 x $10^5$ radians per second. The total phase difference over the entire fibre length will be equal to

100·arccors $\left(1 - \tfrac{1}{2}\omega^2 L_{coil} C_{coating}\right) = 6.28 rad$ .

This means that the total phase difference is equal to one complete period (360°) of the frequency of the voltage applied to the electrodes.

The electro-optical power of each segment is shown in Figure 5.

It can be seen that the amplitudes of the sinusoidal voltages on the first electrode 8 and on the left hand end of the second electrode 12 are selected, in this embodiment, to be both equal to 115 volts.

When the phase difference between the voltage sources of the first electrode 8 and the second electrode 12 is zero, as represented by line 26, then half way along the device, the luminous power will be a maximum and will be above the threshold power of 0.2 Watts represented by line 28. When the phase difference between the two voltage sources is zero therefore, a middle portion of the fibre will emit light, since it is in that portion that the power in the fibre is above the threshold 28.

The luminous section can be moved to any desired position along the length of the device by suitably adjusting the phase difference between the two voltage sources. Line 30 represents the luminous power distribution when the phase difference between the Vcoil (at the left end of the second electrode 12) and Vcore (all along the first electrode 8) is -0.3, and line 32 represents the variation of luminous power along the fibre when the phase difference between the voltage sources is 0.1. It can be seen that the position of region of the fibre in which the luminous power is above the threshold 28 varies with varying phase difference.

Turning now to Figure 6, the variation of luminous power along a fibre 4 having the same parameters as set out hereinabove with reference to Figure 5 as shown. However in the embodiment shown in Figure 6, the amplitudes of the voltages of the first and second electrodes 8, 12 are selected so that they are unequal to each other, but add up to the same total as the total of the voltages set out above with reference to Figure 5. In other words, in this example, the sum of the voltages applied to the first and second electrodes 8, 12 is 230 volts.

It can be seen how the length of a predetermined portion of the device 4 which has sufficient power to overcome the threshold 28 and therefore emit light can vary depending on the difference between the voltages supplied to the first and second electrodes 8, 12. In the example shown with reference to Figure 6, the shortest such length occurs when the voltages applied to the first and second electrodes are both equal to 115 volts. This is represented by line 34. Line 36 shows how the length of this region increases when the voltage applied to the first electrode 8 is 173 volts, and that applied to the second electrode 12 is 58 volts. The length increases further as shown by line 38 when the voltage applied to the first electrode is 196 volts, and that applied to the second electrode is 35 volts. Finally, the predetermined region has the longest length, in this example, as shown by line 40, when the voltage applied to the first electrode is 207 volts, and that applied to the second electrode is 23 volts.

In other embodiments, the driving signals Vcoil and Vcore can be controlled to generate special effects which may be interesting for decorative lighting applications.

For example, when the frequencies of the first 8 and second 12 electrode signals are selected to have slightly different frequencies from one another, the luminous section will gradually move (translate) along the fibre. This means that, for example for a difference in radial frequency of 1 radian per second between the first and second electrodes, the luminous section will move over the complete length of the fibre in 6.3 seconds.

Furthermore, the magnitude of the frequency of the signals applied to the first and second electrodes, is proportional to the total phase shift along the second electrode 12 as explained in more detail hereinbelow with reference to Figure 8. This means that by doubling the frequencies of both signals to the first and second electrodes, the number of luminous sections will double. The luminous sections will form at equi-distant positions. This means that it is possible to create a decorative light that is similar to a conventional "rope light" in appearance, but with the additional possibility to electrically vary the number of luminous sections and let them move along the length of the fibre.

To summarise with respect to the driving parameters of the fibre 4 according to an embodiment of the invention, if the voltages on the first and second electrodes 8, 12 as defined as follows:

$$V_{coil} = \left(\overline{V} + \Delta V\right) \cdot \sin\left[(\overline{\omega} + \Delta\omega) \cdot t\right]$$

$$V_{core} = \left(\overline{V} - \Delta V\right) \cdot \sin\left[(\overline{\omega} - \Delta\omega) \cdot t + \Delta\varphi\right]$$

Then, the functions of all driving parameters are as follows:

- $\overline{V}$ controls the brightness (and width) of the luminous sections
- $\Delta V$ controls the width of the luminous sections
- $\omega$ controls the number of luminous sections
- controls the position of the luminous sections
- controls the speed of luminous sections (as they move along the fibre length)

Referring to Figure 7, a second embodiment of the present invention is designated generally by the reference numeral 70. The fibre 70 comprises a second electrode 72 in the form of an elongate coil extending along an inner conducting core 74. The fibre 70 further comprises an electro-optically active layer 76 surrounding the second electrode 72. The electro-optically active layer 76 is surrounded by a first electrode 78 in the form of a transparent conducting coating. The inner conducting core 74 acts as a third electrode.

The fibre 70 may be used in a similar way to that described hereinabove with respect to fibre 4.

Referring now to Figure 8, an explanation of derivation of phase delay along an inductor wire is illustrated.

If coil resistance R=0 and steady state is reached, then assuming all voltages $V_n$ are sinusoidal with same radial frequency $\omega$ and same amplitude $V_0$, and between neighbouring nodes a phase-delay $\Delta\varphi$ exists, this means (in complex notation):

$$V_{n-1} = V_0 e^{j\omega t + j\Delta\varphi},\ V_n = V_0 e^{j\omega t},\ V_{n+1} = V_0 e^{j\omega t = j\Delta\varphi}$$

Then it follows for the (difference in neighbouring) currents:

$$I_{n\text{-}1} - I_n = \frac{V_{n-1} - V_n}{j\omega L} - \frac{V_n - V_{n+1}}{j\omega L} = \frac{V_0 e^{j\omega t}\left(e^{j\Delta\varphi} - 1\right)}{j\omega L} - \frac{V_0 e^{j\omega t}\left(1 - e^{-j\Delta\varphi}\right)}{j\omega L} = \frac{V_0 e^{j\omega t}\left(2\cos(\Delta\varphi) - 2\right)}{j\omega L}$$

This difference should be consistent with the current through the capacitor:

$$\frac{V_0 e^{j\omega t}(2\cos(\Delta\varphi)-2)}{j\omega L} = I_{n-1} - I_n = V_n j\omega C = V_0 e^{j\omega t} j\omega C$$

Then it follows, for the phase difference between neighbouring nodes (and in approximation for small $\Delta\varphi$):

For the termination impedance $Z_{term}$ then follows (and in approximation for small $\Delta\varphi$):

$$Z_{term} = \frac{V_N}{I_N} = \frac{V_0 e^{j\omega t}}{V_0 e^{j\omega t}(1-e^{-j\arccos(1-\frac{1}{2}\omega^2 LC)})/j\omega L} = \frac{j\omega L}{\frac{1}{2}\omega^2 LC + j\sqrt{1-(1-\frac{1}{2}\omega^2 LC)^2}} =$$

$$Z_{term} = \tfrac{1}{2} j\omega L + \sqrt{\frac{L}{C} - \tfrac{1}{4}\omega^2 L^2} \approx \sqrt{\frac{L}{C}}$$

With a non-zero coil resistance R, above results still hold as long as $R \ll \omega L$.

## Claims

1. An electro-optic device having a first end and an opposite second end (4) comprising an electro-optically active part (10);
a first electrode having a first end and an opposite second end (8);
a second electrode being a coiled elongated member having a first end and an opposite second end (12);
the electro-optically active part (10) being positioned at least partially between the first (8) and second (12) electrodes;
a third electrode being capacitively coupled to the second electrode; the electro-optic device further comprising control means for controlling the optical state of a predetermined region (6) of the electro-optically active part, such that the position of the predetermined region within the electro-optic device (4) is controllable.

2. An electro-optic device (4) according to Claim 1, wherein the length of the predetermined region is controllable.

3. An electro-optic device (4) according to Claim 1 or Claim 2 wherein the control means comprises voltage means adapted to apply an alternating voltage across the electro-optically active part.

4. An electro-optic device according to any one of the preceding claims wherein the voltage means comprises a first voltage source for applying a first voltage to the first end of the first electrode, and a second voltage source for applying a second voltage to the first end of the second electrode.

5. An electro-optic device according to Claim 4 wherein the first electrode is adapted to transfer a first voltage with a substantially constant phase from the first to the second end of the first electrode, and the second electrode is adapted to transfer a second voltage from the first end to the second end of the second electrode, with a phase delay.

6. An electro-optic device according to Claim 4 or 5 wherein the control means further comprises: the third electrode; a plurality of inductive elements incorporated into the second electrode; and a plurality of capacitive elements positioned between the second and third electrodes.

7. An electro-optic device according to any one of Claims 4 to 6 wherein the control means is adapted to controllably vary the phase of the first voltage when applied to the first end of the first electrode relative to the second voltage when applied to the first end of the second electrode.

8. An electro-optic device according to any one of Claims 4 to 7 wherein the control means is adapted to controllably vary the amplitude of the first voltage relative to the second voltage.

9. An electro-optic device according to any one of Claims 4 to 8 wherein the control means is adapted to controllably vary the frequency of the first voltage relative to the second voltage.

**10.** An electro-optic device according to any one of the preceding claims, wherein the electro-optically active layer comprises an electro-optically active material, and the electro-optic device comprises a fibre (4) or filament.

**11.** An electro-optic device according to Claim 10 wherein the fibre or filament is substantially cylindrical.

**12.** An electro-optic device according to any one of the preceding claims wherein the electro-optically active part (10) comprises an electroluminescent material.

**13.** An electro-optic device according to Claim 11 or Claim 12 wherein the second electrode comprises an elongate conductor in the form of a wound coil having a plurality of coils.

**14.** An electro-optic device according to Claim 13 further comprising an insulating coating (16) formed between adjacent coils (14) of the elongate conductor.

**15.** An electro-optic device according to Claim 14, wherein the insulating coating (16) encases the elongate conductor.

**16.** An electro-optic device according to Claim 14 or Claim 15 wherein the insulating coating (16) is transparent.

**17.** An electro-optic device according to any one of Claims 6 to 16 wherein the third electrode comprises an outer conducting coating (18).

**18.** An electro-optic device according to Claim 17 wherein the third electrode (18) is transparent.

**19.** A method of manufacturing an electro-optic device comprising the steps of:

(a) depositing a layer of an electro-optically active material (10) around a first elongate conducting member (8);
(b) allowing the layer to harden;
(c) winding a second elongate conducting member (12) around the hardened electro-optically active material;
(d) depositing an insulating material (16) between adjacent coils (14) of the second conducting member;
(e) depositing a conducting coating (18) around the fibre or filament being capacitively coupled to the second electrode (12).

**20.** A method according to Claim 19 comprising the additional step of:

(f) depositing a layer of insulating material (16) around the second elongate conducting member before carrying out step (c).

**21.** A method of driving an electro-optic device comprising a first electrode, a second electrode each electrode having a first end and a second end, and an electro-optically active part positioned at least partially between the first and second electrodes, the second electrode being a coiled elongated member and the electro-optic device further comprising a third electrode being capacitively coupled to the second electrode, the method comprising the steps of:

applying an alternating voltage difference across the electro-optically active layer by applying a first voltage to the first electrode, and a second voltage to the second electrode; and
introducing a phase delay into the second electrode, thereby controlling the amplitude of the alternating voltage difference across the electro-optically active layer.

**22.** A method of driving an electro-optic device according to Claim 21 comprising the further step of controlling the phase of the first voltage when applied to the first end of the first electrode, relative to the phase of the second voltage when applied to the first end of the second electrode.

**23.** A method according to Claim 21 or Claim 22 comprising the further step of controlling the frequency of the first voltage relative to the second voltage.

**24.** A method according to any one of Claims 21 to 23 comprising the step of controlling the amplitude of the first voltage relative to the second voltage.

**25.** A fabric or textile formed from a plurality of electro-optic devices (4) according to any one of Claims 10 to 18.

**26.** A garment formed from a plurality of electro-optic devices (4) according to any one of Claims 10 to 18.

**Patentansprüche**

**1.** Elektrooptische Anordnung mit einem ersten Ende und einem gegenüberliegenden zweiten Ende (4), die ein elektrooptisch aktives Teil (10) umfasst;
wobei eine erste Elektrode ein erstes Ende und ein gegenüberliegendes zweites Ende (8) hat;
wobei eine zweite Elektrode ein gewendeltes langgestrecktes Glied ist, das ein erstes Ende und ein gegenüberliegendes zweites Ende (12) hat;
wobei das elektrooptisch aktive Teil (10) zumindest zum Teil zwischen der ersten (8) und der zweiten (12) Elektrode positioniert ist;
wobei eine dritte Elektrode mit der zweiten Elektrode kapazitiv gekoppelt ist; welche elektrooptische Anordnung weiterhin Steuerungsmittel zum Steuern des optischen Zustandes eines zuvor bestimmten Gebietes (6) des elektrooptisch aktiven Teils umfasst, so dass die Position des zuvor bestimmten Gebietes innerhalb der elektrooptischen Anordnung (4) steuerbar ist.

**2.** Elektrooptische Anordnung (4) nach Anspruch 1, bei der die Länge des zuvor bestimmten Gebietes steuerbar ist.

**3.** Elektrooptische Anordnung (4) nach Anspruch 1 oder Anspruch 2, bei der das Steuerungsmittel Spannungsmittel umfasst, eingerichtet zum Anlegen einer Wechselspannung an das elektrooptisch aktive Teil.

**4.** Elektrooptische Anordnung nach einem der vorhergehenden Ansprüche, bei der das Spannungsmittel eine erste Spannungsquelle zum Anlegen einer ersten Spannung an das erste Ende der ersten Elektrode und eine zweite Spannungsquelle zum Anlegen einer zweiten Spannung an das erste Ende der zweiten Elektrode umfasst.

**5.** Elektrooptische Anordnung nach Anspruch 4, bei der die erste Elektrode eingerichtet ist, eine erste Spannung mit einer nahezu konstanten Phase vom ersten zum zweiten Ende der ersten Elektrode zu übertragen, und die zweite Elektrode eingerichtet ist, eine zweite Spannung vom ersten Ende zum zweiten Ende der zweiten Elektrode mit einer Phasenverzögerung zu übertragen.

**6.** Elektrooptische Anordnung nach Anspruch 4 oder 5, bei der das Steuerungsmittel weiterhin Folgendes umfasst: die dritte Elektrode; eine Vielzahl von in der zweiten Elektrode aufgenommenen induktiven Elementen und eine Vielzahl von zwischen der zweiten und der dritten Elektrode positionierten kapazitiven Elementen.

**7.** Elektrooptische Anordnung nach einem der Ansprüche 4 bis 6, bei der das Steuerungsmittel eingerichtet ist, die Phase der ersten Spannung, wenn diese am ersten Ende der ersten Elektrode anliegt, relativ zu der zweiten Spannung, wenn diese am ersten Ende der zweiten Elektrode anliegt, kontrollierbar zu ändern.

**8.** Elektrooptische Anordnung nach einem der Ansprüche 4 bis 7, bei der das Steuerungsmittel eingerichtet ist, die Amplitude der ersten Spannung relativ zu der zweiten Spannung kontrollierbar zu ändern.

**9.** Elektrooptische Anordnung nach einem der Ansprüche 4 bis 8, bei der das Steuerungsmittel eingerichtet ist, die Frequenz der ersten Spannung relativ zu der zweiten Spannung kontrollierbar zu ändern.

**10.** Elektrooptische Anordnung nach einem der vorhergehenden Ansprüche, bei der die elektrooptisch aktive Schicht ein elektrooptisch aktives Material umfasst und die elektrooptische Anordnung eine Faser (4) oder einen Faden umfasst.

**11.** Elektrooptische Anordnung nach Anspruch 10, bei der die Faser oder der Faden im Wesentlichen zylindrisch ist.

**12.** Elektrooptische Anordnung nach einem der vorhergehenden Ansprüche, bei der das elektrooptisch aktive Teil (10) ein elektrolumineszierendes Material umfasst.

**13.** Elektrooptische Anordnung nach Anspruch 11 oder Anspruch 12, bei der die zweite Elektrode einen langgestreckten Leiter in Form einer gewickelten Spule umfasst, die eine Vielzahl von Windungen hat.

**14.** Elektrooptische Anordnung nach Anspruch 13, die weiterhin eine zwischen benachbarten Windungen (14) des langgestreckten Leiters gebildete Isolierbeschichtung (16) umfasst.

**15.** Elektrooptische Anordnung nach Anspruch 14, bei der die Isolierbeschichtung (16) den langgestreckte Leiter umhüllt.

**16.** Elektrooptische Anordnung nach Anspruch 14 oder Anspruch 15, bei der die Isolierbeschichtung (16) transparent ist.

**17.** Elektrooptische Anordnung nach einem der Ansprüche 6 bis 16, bei der die dritte Elektrode eine äußere leitende Beschichtung (18) umfasst.

**18.** Elektrooptische Anordnung nach Anspruch 17, bei der die dritte Elektrode (18) transparent ist.

**19.** Verfahren zum Herstellen einer elektrooptischen Anordnung mit den folgenden Schritten:

(a) Deponieren einer Schicht aus einem elektrooptisch aktiven Material (10) um ein erstes langgestrecktes leitendes Glied (8) herum;
(b) Aushärtenlassen der Schicht;
(c) Wickeln eines zweiten langgestreckten leitenden Gliedes (12) um das ausgehärtete elektrooptisch aktive Material;
(d) Deponieren eines isolierenden Materials (16) zwischen benachbarten Windungen (14) des zweiten leitenden Gliedes;
(e) Deponieren einer leitenden Beschichtung (18) um die (den) kapazitiv mit der zweiten Elektrode (12) gekoppelte(n) Faser oder Faden herum.

**20.** Verfahren nach Anspruch 19 mit dem zusätzlichen Schritt:

(f) Deponieren einer Schicht aus isolierendem Material (16) um das zweite langgestreckte leitende Glied herum vor dem Ausführen von Schritt (c).

**21.** Verfahren zum Ansteuern einer elektrooptischen Anordnung mit einer ersten Elektrode, einer zweiten Elektrode, wobei jede Elektrode ein erstes Ende und ein zweites Ende aufweist, und einem elektrooptisch aktiven Teil, das zumindest zum Teil zwischen der ersten und der zweiten Elektrode positioniert ist; wobei die zweite Elektrode ein gewendeltes langgestrecktes Glied ist und die elektrooptische Anordnung weiterhin eine dritte Elektrode umfasst, die mit der zweiten Elektrode kapazitiv gekoppelt ist, welches Verfahren die folgenden Schritte umfasst:

Anlegen einer Wechselspannungsdifferenz an der elektrooptisch aktiven Schicht durch Anlegen einer ersten Spannung an die erste Elektrode und einer zweiten Spannung an die zweite Elektrode und
Einbringen einer Phasenverzögerung in die zweite Elektrode und **dadurch** Steuern der Amplitude der Wechselspannungsdifferenz an der elektrooptisch aktiven Schicht.

**22.** Verfahren zum Ansteuern einer elektrooptischen Anordnung nach Anspruch 21, das den weiteren Schritt des Steuerns der Phase der ersten Spannung, wenn diese am ersten Ende der ersten Elektrode anliegt, relativ zu der Phase der zweiten Spannung, wenn diese am ersten Ende der zweiten Elektrode anliegt, umfasst.

**23.** Verfahren nach Anspruch 21 oder Anspruch 22, das den weiteren Schritt des Steuerns der Frequenz der ersten Spannung relativ zu der zweiten Spannung umfasst.

**24.** Verfahren nach einem der Ansprüche 21 bis 23, das den Schritt des Steuerns der Amplitude der ersten Spannung relativ zu der zweiten Spannung umfasst.

**25.** Stoff oder Gewebe, gebildet aus einer Vielzahl von elektrooptischen Anordnungen (4) nach einem der Ansprüche 10 bis 18.

**26.** Kleidungsstück, gebildet aus einer Vielzahl von elektrooptischen Anordnungen (4) nach einem der Ansprüche 10 bis 18.

## Revendications

1. Dispositif électro-optique ayant une première extrémité et une deuxième extrémité opposée (4) comprenant une partie électro-optiquement active (10) ;
une première électrode ayant une première extrémité et une deuxième extrémité opposée (8) ;
une deuxième électrode étant un élément allongé enroulé ayant une première extrémité et une deuxième extrémité opposée (12) ;
la partie électro-optiquement active (10) étant positionnée au moins partiellement entre les première (8) et deuxième (12) électrodes ;
une troisième électrode étant couplée de façon capacitive à la deuxième électrode ; le dispositif électro-optique comprenant encore des moyens de commande pour commander l'état optique d'une région prédéterminée (6) de la partie électro-optiquement active de telle façon que la position de la région prédéterminée à l'intérieur du dispositif électro-optique (4) soit contrôlable.

2. Dispositif électro-optique (4) selon la revendication 1, dans lequel la longueur de la région prédéterminée est contrôlable.

3. Dispositif électro-optique (4) selon la revendication 1 ou selon la revendication 2, dans lequel les moyens de commande comprennent des moyens de tension qui sont adaptés de manière à appliquer une tension alternative à travers la partie électro-optiquement active.

4. Dispositif électro-optique selon l'une quelconque des revendications précédentes 1 à 3, dans lequel les moyens de tension comprennent une première source de tension pour appliquer une première tension à la première extrémité de la première électrode et une deuxième source de tension pour appliquer une deuxième tension à la première extrémité de la deuxième électrode.

5. Dispositif électro-optique selon la revendication 4, dans lequel la première électrode est adaptée de manière à transférer une première tension avec une phase sensiblement constante à partir de la première extrémité à la deuxième extrémité de la première électrode et la deuxième électrode est adaptée de manière à transférer une deuxième tension à partir de la première extrémité à la deuxième extrémité de la deuxième électrode, avec un retard de phase.

6. Dispositif électro-optique selon la revendication 4 ou selon la revendication 5, dans lequel les moyens de commande comprennent encore la troisième électrode ; une pluralité d'éléments inductifs étant incorporés dans la deuxième électrode et une pluralité d'éléments capacitifs étant positionnés entre les deuxième et troisième électrodes.

7. Dispositif électro-optique selon l'une quelconque des revendications précédentes 4 à 6, dans lequel les moyens de commande sont adaptés de manière à faire varier d'une manière contrôlable la phase de la première tension lorsqu'elle est appliquée à la première extrémité de la première électrode par rapport à la deuxième tension lorsqu'elle est appliquée à la première extrémité de la deuxième électrode.

8. Dispositif électro-optique selon l'une quelconque des revendications précédentes 4 à 7, dans lequel les moyens de commande sont adaptés de manière à faire varier d'une manière contrôlable l'amplitude de la première tension par rapport à la deuxième tension.

9. Dispositif électro-optique selon l'une quelconque des revendications précédentes 4 à 8, dans lequel les moyens de commande sont adaptés de manière à faire varier d'une manière contrôlable la fréquence de la première tension par rapport à la deuxième tension.

10. Dispositif électro-optique selon l'une quelconque des revendications précédentes 1 à 9, dans lequel la couche électro-optiquement active comprend un matériau électro-optiquement actif et dans lequel le dispositif électro-optique comprend une fibre (4) ou un filament.

11. Dispositif électro-optique selon la revendication 10, dans lequel la fibre ou le filament est sensiblement cylindrique.

12. Dispositif électro-optique selon l'une quelconque des revendications précédentes 1 à 11, dans lequel la partie électro-optiquement active (10) comprend un matériau électroluminescent.

**13.** Dispositif électro-optique selon la revendication 11 ou selon la revendication 12, dans lequel la deuxième électrode comprend un conducteur allongé sous forme d'une bobine enroulée ayant une pluralité de bobines.

**14.** Dispositif électro-optique selon la revendication 13, comprenant encore un revêtement isolant (16) qui est formé entre des bobines adjacentes (14) du conducteur allongé.

**15.** Dispositif électro-optique selon la revendication 14, dans lequel le revêtement isolant (16) enrobe le conducteur allongé.

**16.** Dispositif électro-optique selon la revendication 14 ou selon la revendication 15, dans lequel le revêtement isolant (16) est transparent.

**17.** Dispositif électro-optique selon l'une quelconque des revendications précédentes 6 à 16, dans lequel la troisième électrode comprend un revêtement conducteur extérieur (18).

**18.** Dispositif électro-optique selon la revendication 17, dans lequel la troisième électrode (18) est transparente.

**19.** Procédé de fabrication d'un dispositif électro-optique comprenant les étapes suivantes consistant à :

(a) déposer une couche constituée d'un matériau électro-optiquement actif (10) autour d'un premier élément conducteur allongé (8) ;
(b) permettre le durcissement de la couche ;
(c) enrouler un deuxième élément conducteur allongé (12) autour du matériau durci électro-optiquement actif ;
(d) déposer un matériau isolant (16) entre les bobines adjacentes (14) du deuxième élément conducteur ;
(e) déposer un revêtement conducteur (18) autour de la fibre ou du filament étant couplé de façon capacitive à la deuxième électrode (12).

**20.** Procédé selon la revendication 19 comprenant l'étape additionnelle consistant à :

(f) déposer une couche constituée de matériau isolant (16) autour du deuxième élément conducteur allongé avant de n'effectuer l'étape (c).

**21.** Procédé d'entraînement d'un dispositif électro-optique comprenant une première électrode, une deuxième électrode, chaque électrode ayant une première extrémité et une deuxième extrémité, et une partie électro-optiquement active qui est positionnée au moins partiellement entre les première et deuxième électrodes, la deuxième électrode étant un élément allongé enroulé et le dispositif électro-optique comprenant encore une troisième électrode qui est couplée de façon capacitive à la deuxième électrode, le procédé comprenant les étapes suivantes consistant à :

appliquer une différence de tension alternative à travers la couche électro-optiquement active en appliquant une première tension à la première électrode et une deuxième tension à la deuxième électrode ; et
introduire un retard de phase dans la deuxième électrode, de ce fait commandant l'amplitude de la différence de tension alternative à travers la couche électro-optiquement active.

**22.** Procédé d'entraînement d'un dispositif électro-optique selon la revendication 21, comprenant la nouvelle autre étape consistant à commander la phase de la première tension lorsqu'elle est appliquée à la première extrémité de la première électrode par rapport à la phase de la deuxième tension lorsqu'elle est appliquée à la première extrémité de la deuxième électrode.

**23.** Procédé selon la revendication 21 ou selon la revendication 22, comprenant la nouvelle autre étape consistant à commander la fréquence de la première tension par rapport à la deuxième tension.

**24.** Procédé selon l'une quelconque des revendications précédentes 21 à 23, comprenant l'étape suivante consistant à commander l'amplitude de la première tension par rapport à la deuxième tension.

**25.** Tissu ou du textile qui est formé à partir d'une pluralité de dispositifs électro-optiques (4) selon l'une quelconque des revendications précédentes 10 à 18.

**26.** Vêtement qui est formé à partir d'une pluralité de dispositifs électro-optiques (4) selon l'une quelconque des revendications précédentes 10 à 18.

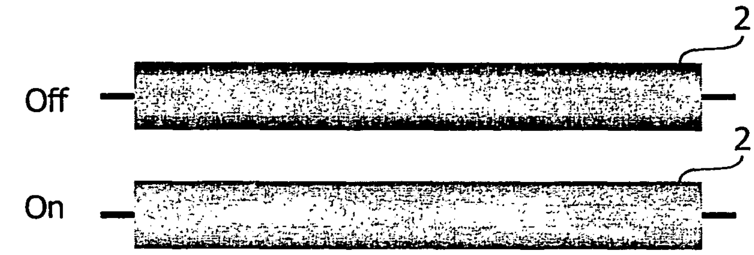


FIG. 1a

FIG. 1b

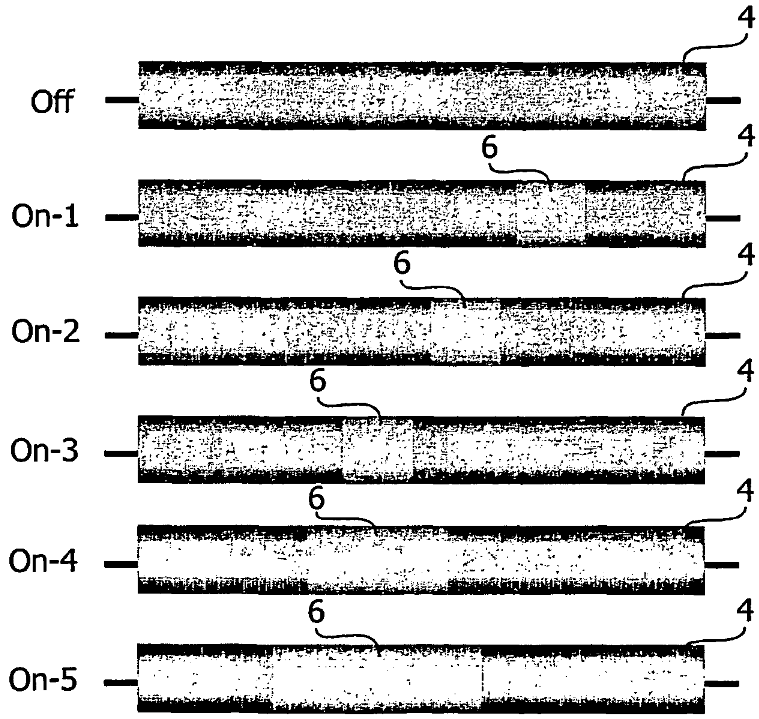


FIG. 2a

FIG. 2b

FIG. 2c

FIG. 2d

FIG. 2e

FIG. 2f

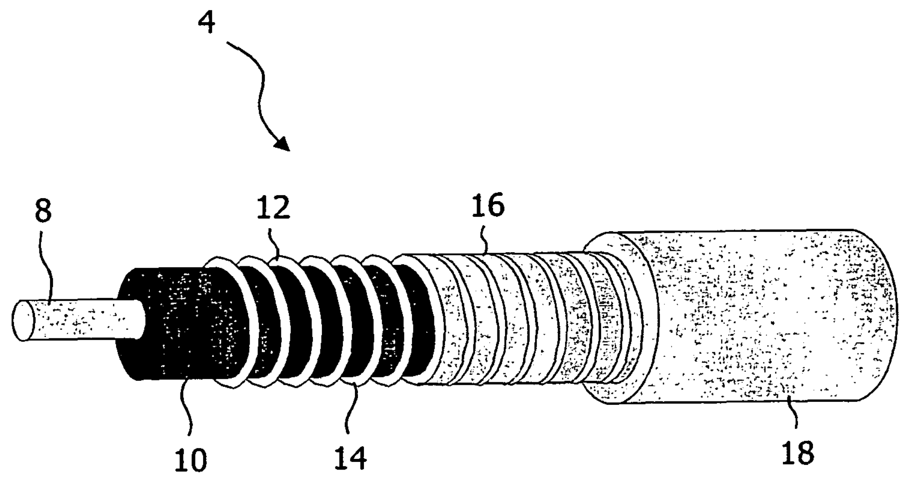
4
8
12
16
10
14
18

FIG. 3

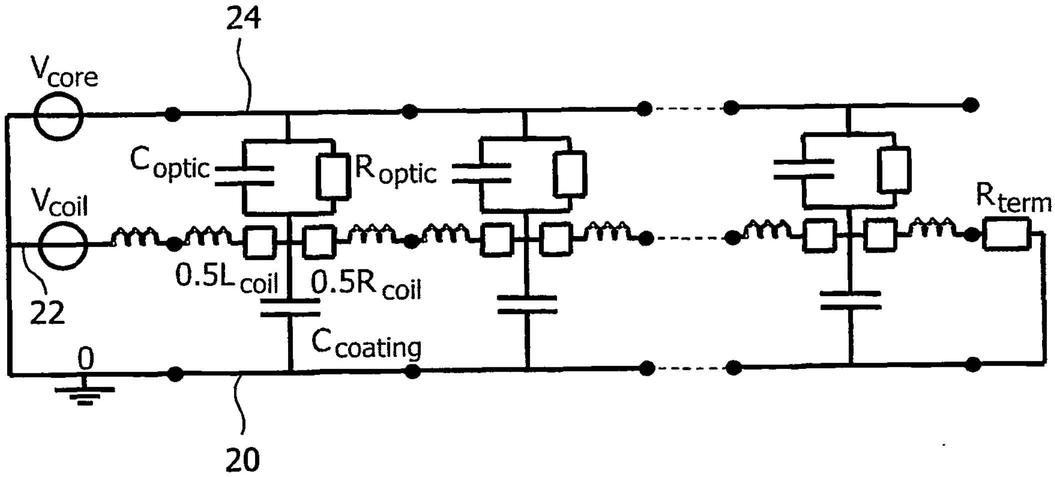
24
Vcore
Coptic
Roptic
Vcoil
Rterm
0.5Lcoil
0.5Rcoil
22
Ccoating
0
20

FIG. 4

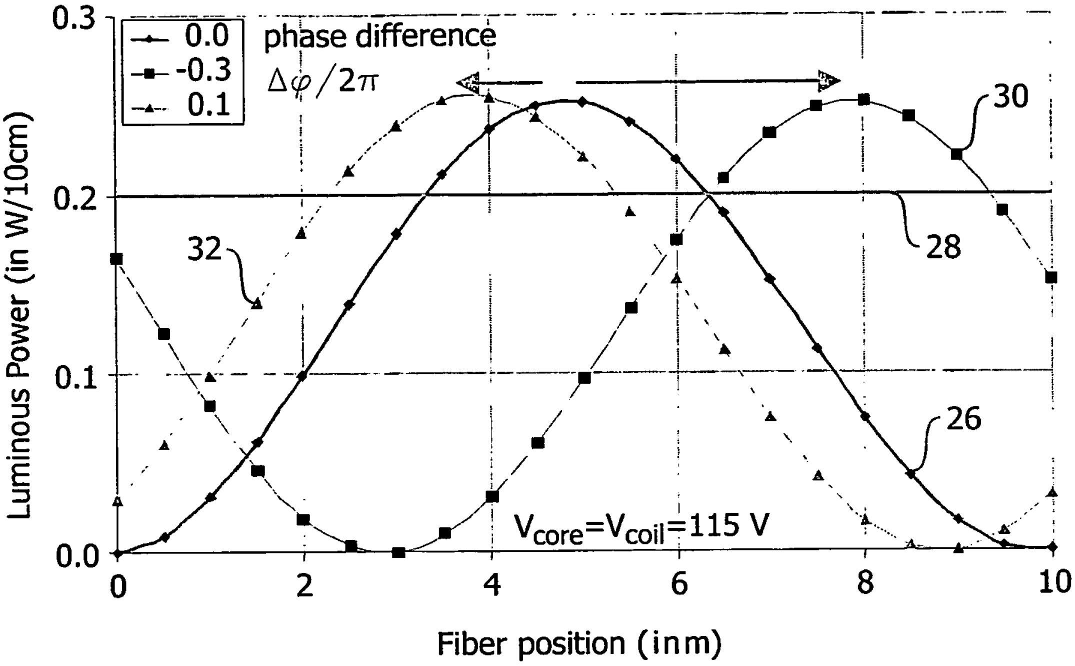
0.3
0.2
0.1
0.0
Luminous Power (in W/10cm)
0.0
-0.3
0.1
phase difference
Δφ/2π
30
28
32
26
Vcore=Vcoil=115 V
0
2
4
6
8
10
Fiber position (inm)

FIG. 5

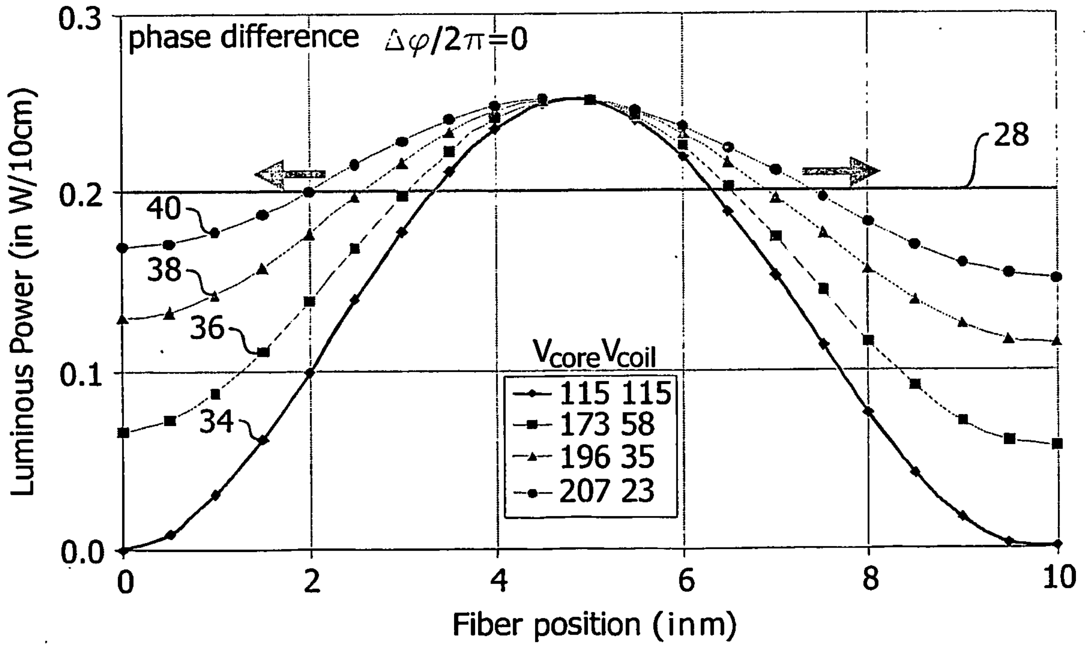
0.3
0.2
0.1
0.0
Luminous Power (in W/10cm)
phase difference Δφ/2π=0
28
40
38
36
34
VcoreVcoil
115 115
173 58
196 35
207 23
0
2
4
6
8
10
Fiber position (inm)

FIG. 6

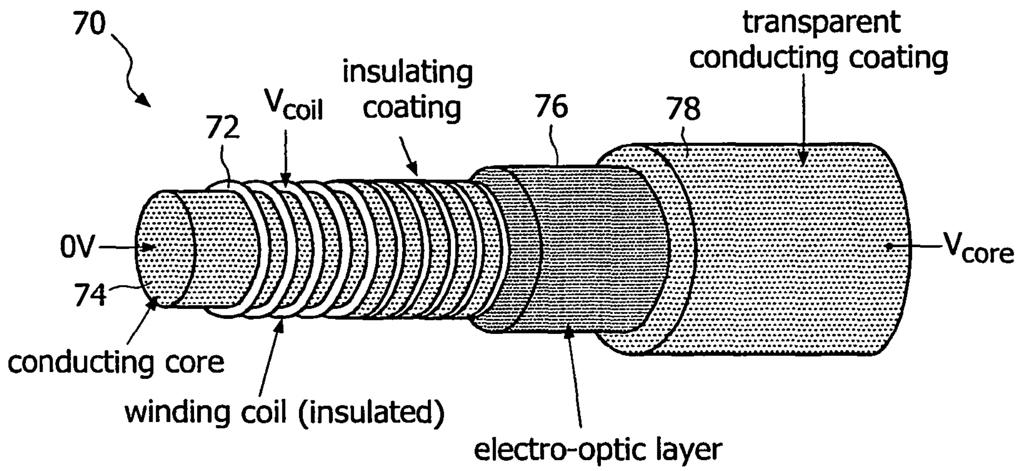
70
transparent
conducting coating
insulating
coating
$V_{coil}$
72
76
78
0V
$V_{core}$
74
conducting core
winding coil (insulated)
electro-optic layer

FIG. 7

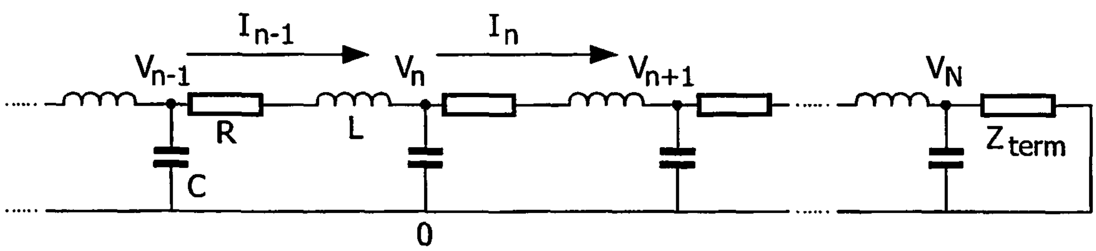
$I_{n-1}$
$I_n$
$V_{n-1}$
$V_n$
$V_{n+1}$
$V_N$
R
L
C
$Z_{term}$
0

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5753381 A